# EUROPÄISCHE PATENTSCHRIFT

(11) **EP 3 454 298 B1**
(45) Veröffentlichungstag und Bekanntmachung des Hinweises auf die Patenterteilung: **07.08.2019**
(21) Anmeldenummer: 17189567.5
(22) Anmeldetag: 06.09.2017
(51) Int. Cl.: G06T 7/11, G06T 7/33, G06T 7/174, G06T 7/194, G06T 3/00

(54) **KAMERAVORRICHTUNG UND VERFAHREN ZUR ERFASSUNG EINES STROMES AUS OBJEKTEN**
CAMERA DEVICE AND METHOD FOR RECORDING A FLOW OF OBJECTS
SYSTÈME DE CAMÉRA ET PROCÉDÉ DE DÉTERMINATION D'UN FLUX D'OBJETS

(43) Veröffentlichungstag der Anmeldung: 13.03.2019
(73) Patentinhaber: Sick AG, 79183 Waldkirch (DE)
(72) Erfinder: Walter, Stephan, 79215 Elzach-Yach (DE); Hafner, Carl, 79276 Reute (DE)

(56) Entgegenhaltungen:
- EP-A1- 2 693 363
- US-A1- 2007 237 356
- SHAH SYED M ET AL: "Removal of specular reflections from image sequences using feature correspondences", MACHINE VISION AND APPLICATIONS, SPRINGER VERLAG, DE, Bd. 28, Nr. 3, 18. Februar 2017 (2017-02-18), Seiten 409-420, XP036217192, ISSN: 0932-8092, DOI: 10.1007/S00138-017-0826-6 [gefunden am 2017-02-18]

## Beschreibung

Die Erfindung betrifft eine Kameravorrichtung und ein Verfahren zur Erfassung eines bewegten Stroms von Objekten nach dem Oberbegriff von Anspruch 1 beziehungsweise 13.

Zur Automatisierung von Vorgängen an einem Förderband werden Sensoren eingesetzt, um Objekteigenschaften der geförderten Objekte zu erfassen und in Abhängigkeit davon weitere Bearbeitungsschritte einzuleiten. In der Logistikautomation besteht die Bearbeitung typischerweise in einer Sortierung, etwa bei der automatischen Paketidentifikation, für Postsendungen oder die Gepäckabfertigung in Flughäfen. Neben allgemeinen Informationen, wie Volumen und Gewicht der Objekte, dient als wichtigste Informationsquelle häufig ein an dem Objekt angebrachter optischer Code. In anderen Fällen geht es um eine Inspektion oder Qualitätsprüfung, an der ein optischer Code beteiligt sein kann, aber nicht muss.

Mit der Weiterentwicklung der digitalen Kameratechnologie werden zum Codelesen zunehmend kamerabasierte Codeleser eingesetzt. Statt Codebereiche wie in einem Barcodescanner abzuscannen, nimmt ein kamerabasierter Codeleser mit Hilfe eines pixelaufgelösten Bildsensors Bilder der Objekte mit den darauf befindlichen Codes auf, und eine Bildauswertungssoftware extrahiert aus diesen Bildern die Codeinformation. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen. In einer wichtigen Anwendungsgruppe werden die Code tragenden Objekte an dem Codeleser vorbei gefördert. Eine Kamera liest die Objektbilder mit den Codeinformationen sukzessive mit der Relativbewegung ein.

Ein einzelner Sensor reicht oft nicht aus, um sämtliche relevanten Informationen über die Objekte auf einem Förderband aufzunehmen. Deshalb werden mehrere Sensoren in einem Lesesystem oder Lesetunnel zusammengefasst. Liegen zur Erhöhung des Objektdurchsatzes mehrere Förderbänder nebeneinander, oder wird ein verbreitertes Förderband verwendet, so ergänzen sich mehrere Sensoren in ihren an sich zu schmalen Sichtfeldern gegenseitig, um die gesamte Breite abzudecken. Außerdem werden Sensoren in unterschiedlichen Perspektiven montiert, um Codes von allen Seiten aufzunehmen (Omni-Lesung).

Das Lesesystem stellt die erfassten Informationen, wie Codeinhalte und Bilder des Objektstroms, einer übergeordneten Steuerung zur Verfügung. Diese Bilder werden beispielsweise für eine externe Texterkennung, eine Visualisierung oder eine manuelle Nachbearbeitung (Video Coding) genutzt. Sind nun mehrere Sensoren nebeneinander angeordnet, um einen breiteren Lesebereich abzudecken, so ergeben sich Schwierigkeiten. Prinzipiell sind aus der Literatur Bildverarbeitungsverfahren bekannt, welche Bilder aus mehreren Quellen zusammenfügen ("Image Stitching"). Solche Verfahren arbeiten allein mit den Bilddaten, und das wird bei einer größeren Anzahl beteiligter Sensoren aufwändig, zumal Erfolg und Güte des Zusammenfügens dann stark von den Bilddaten abhängen.

Es ist also nicht ohne weiteres möglich, ein Objektbild der jeweiligen Objekte auf dem Förderband zu erhalten, welches der übergeordneten Steuerung übergeben werden kann. Es ist praktisch nicht umsetzbar, einfach die Einzelbilder der beteiligten Sensoren als solche in der übergeordneten Steuerung zu speichern, da die Datenmenge immens wäre. Außerdem müsste dann die übergeordnete Steuerung mit dem Problem umgehen, Einzelbilder zu einem Objektbild zusammenzufügen, das somit nur verschoben würde.

Im Stand der Technik wird oft den eigentlichen Sensoren, also beispielsweise den kamerabasierten Codelesern, ein weiterer Sensor vorgeordnet, um die Objekte vorab zu erfassen oder zu vermessen. So kann beispielsweise zu einem Objekt nicht nur der Inhalt der darauf befindlichen Codes, sondern auch dessen Volumen an die übergeordnete Steuerung übergeben werden. Ein Objektbild der einzelnen Objekte steht der übergeordneten Steuerung dadurch weiterhin nicht zur Verfügung.

Die EP 1 645 839 B1 offenbart eine Vorrichtung zur Überwachung von bewegten Objekten an einem Förderband, die einen vorgeordneten entfernungsmessenden Laserscanner zur Erfassung der Geometrie der Objekte auf dem Förderband und eine Zeilenkamera aufweist. Aufgrund der Daten des Laserscanners werden Objektbereiche als interessierende Bereiche (ROI, region of interest) erkannt, und die Auswertung der Bilddaten der Zeilenkamera wird auf diese interessierenden Bereiche beschränkt. Das Zusammenfügen von Bilddaten nebeneinander angeordneter Codeleser ist dabei nicht vorgesehen.

In der EP 2 546 776 B1 sind mehrere zeilenbasierte Codeleser nebeneinander in einem gemeinsamen Gehäuse untergebracht, deren Bildzeilen zu einem gemeinsamen Bild zusammengefügt werden. Ein bezüglich der Förderrichtung oberhalb der Codeleser angebrachter Laserscanner misst vorab die Höhenkontur der Objekte, um Objekte als Einzelobjekte zu erkennen, leere Förderbandbereiche als uninteressant zu markieren oder Fokuseinstellungen vorzunehmen. Die auszugebende Datenmenge für das jeweilige Gesamtbild ist immer noch sehr hoch. Es ist in der EP 2 546 776 B1 nicht vorgesehen, Bilder einzelner Objekte zu erzeugen, und diese mit Bildauswertungsverfahren aus dem Gesamtbild zu extrahieren wäre immer noch anspruchsvoll und aufwändig. Außerdem ist das Zusammenfügen von Bildern unter den gegebenen Randbedingungen, nämlich zueinander in bekannter Weise justierte Zeilensensoren, vergleichsweise einfach.

Die EP 2 693 364 A1 befasst sich mit einem weiteren Kamerasystem, das mit mehreren überlappend aufnehmenden Erfassungseinheiten gemeinsam die gesamte Breite eines Stromes von Objekten abdeckt. Für das Zusammensetzen der erfassten Bilddaten zu einem gemeinsamen Bild werden interessierende Bereiche identifiziert, beispielsweise Codebereiche, und eine Verbindungsnaht wird so gelegt, dass das gemeinsame Bild innerhalb eines interessierenden Bereichs nur Bilddaten der gleichen Erfassungseinheit enthält. Dadurch wird ein hochwertigeres Gesamtbild aller Objekte gewonnen, in dem Codebereiche nicht durch die Verbindungsnaht unlesbar werden können. Bilder einzelner Objekte werden aber nicht erzeugt, und dies müsste erneut in aufwändiger Weise durch Segmentierung in einem nachgelagerten Bildverarbeitungsverfahren geschehen.

Die EP 2 693 363 A1 offenbart ein Kamerasystem mit mehreren Erfassungseinheiten, die jeweils eine Fokussiereinheit aufweisen, um bei gleichzeitiger Erfassung mehrerer Objekte die Fokuslagen komplementär einstellen zu können und so möglichst viele Objekte mit zumindest einer Erfassungseinheit scharf aufzunehmen.

Aus der US 2007/0237356 A1 ist ein Kamerasystem bekannt, welches Pakete aus verschiedenen Perspektiven aufnimmt und daraus dreidimensionale Paketansichten erzeugt.

Es ist daher Aufgabe der Erfindung, auf effiziente Weise verbesserte Ausgabedaten eines gattungsgemäßen Kamerasystems zu erhalten.

Diese Aufgabe wird durch eine Kameravorrichtung und ein Verfahren zur Erfassung eines bewegten Stroms von Objekten nach Anspruch 1 beziehungsweise 13 gelöst. Die Kameravorrichtung umfasst eine Vielzahl von Einzelkameras, deren jeweiliger Erfassungsbereich nicht ausreicht, dass ein Einzelbild die Breite des Objektstroms abdeckt. Die zumindest teilweise überlappenden Einzelbilder werden zusammengefügt (Image Stitching). Ein Geometrieerfassungssensor erzeugt zusätzlich zu den Einzelbildern Geometriedaten der Objekte, beispielsweise Objektkonturen durch Entfernungsmessung.

Die Erfindung geht von dem Grundgedanken aus, die Bildverarbeitung der Einzelbilder durch die Geometriedaten zu unterstützen. Um ein Objektbild eines einzelnen Objekts des Stroms von Objekten ausgeben zu können, werden auf Basis der Geometriedaten die beteiligten Einzelbilder ausgewählt. Das Objektbild wird also gerade nicht, wie es auch im Stand der Technik nachträglich denkbar wäre, aus einem zusammengefügten Gesamtbild ausgeschnitten, sondern vielmehr das Objektbild selbst aus Einzelbildern zusammengefügt. Alternativ oder zusätzlich wird auch der Prozess des Zusammenfügens selbst beziehungsweise der Bildfusionsalgorithmus durch die Geometriedaten vereinfacht.

Die Erfindung hat den Vorteil, dass über das jeweilige Objektbild wertvolle zusätzliche Daten ausgegeben werden können, die für Diagnose, Visualisierung, Nachbearbeitung und ähnliche Zwecke nutzbar sind ("offshore video coding"). Aufgrund des Vorwissens in Form der Geometriedaten wird ein sehr robustes und zuverlässiges Zusammenfügen von Einzelbildern zu einem jeweiligen Objektbild ermöglicht. Die Qualität der Objektbilder ist hoch, insbesondere bleiben sensible Regionen wie Codebereiche und Adressfelder lesbar. Zugleich ist das Vorgehen durch Ausnutzen der Geometriedaten sehr effizient und damit bei Bedarf sogar in Echtzeit möglich, da nur Einzelbilder verarbeitet müssen, die tatsächlich an dem Objektbild beteiligt sind und zudem die Bildfusion und -verarbeitung mittels der Geometriedaten deutlich vereinfacht werden kann.

Die Bildsensoren der Einzelkameras sind vorzugsweise Matrixsensoren und erzeugen somit ein zweidimensionales Bild. Dann zeigen sich die Vorteile der Erfindung besonders deutlich, weil das Zusammenfügen von flächigen Bildern mehr Freiheitsgrade lässt und daher komplexer ist. Prinzipiell sind aber auch Zeilensensoren denkbar, etwa im Falle besonders breiter Förderbänder, die auch eine einzelne Zeilenkamera nicht mehr abgedeckt.

Der mindestens eine Geometrieerfassungssensor ist vorzugsweise ein Laserscanner oder eine 3D-Kamera und erfasst eine Punktwolke oder Entfernungskarte der Objekte, wobei die Geometriedaten dann weiter aufbereitet werden können. Vorzugsweise ist der Geometrieerfassungssensor bezüglich der Bewegungsrichtung des Stroms oberhalb der Einzelkameras angeordnet, so dass die Geometriedaten vorab zur Verfügung stehen. Es ist aber auch denkbar, die Geometrieerfassung in die Einzelkameras zu integrieren, beispielsweise durch ein Lichtlaufzeit- oder Stereoverfahren.

Die Geometriedaten weisen bevorzugt eine das einzelne Objekt umschreibende Fläche auf. Die Geometriedaten sind an sich dreidimensional. Daraus wird ein zweidimensionaler Bereich abgeleitet, wo sich aus Sicht der Einzelkameras das Objekt befindet. Ein solcher Bereich lässt sich mit wenigen Datenpunkten beschreiben, beispielsweise als Polygon oder vorzugsweise als Rechteck. Dadurch wird nicht nur die Datenmenge begrenzt, sondern das Ausnutzen der Geometrieinformationen bei der Auswahl von Einzelbildern und/oder deren Zusammenfügen erheblich vereinfacht.

Die Geometriedaten beschreiben bevorzugt die 3D-Kontur des einzelnen Objekts. Dazu kann bereits die 2,5D-Punktwolke beziehungsweise Entfernungskarte des Geometrieerfassungssensors verwendet werden, die dann auf den Bereich des Objekts zugeschnitten wird. Es ist aber auch denkbar, ein Objektmodell beispielsweise als Kantenmodell, durch Angabe der Eckpunkte, trianguliertes Netz oder rekonstruierte Oberfläche des einzelnen Objekts zu erzeugen. Aus der 3D-Kontur können Objektbilder mit unregelmäßiger Oberfläche erzeugt werden, um die Vereinfachung auf flache, zweidimensionale Objektbilder aufzuheben. Weiterhin ist möglich, sofern Anordnungen von Einzelkameras in mehreren Perspektiven zur Verfügung stehen, ein echtes 3D-Modell des Objekts samt Texturen aus den Einzelbildern zu erzeugen, um das Objekt im Nachhinein von verschiedenen Seiten zu betrachten. Ein solches 3D-Modell kann für regulär wie irregulär geformte Objekte erstellt werden.

Die Auswertungseinheit ist bevorzugt dafür ausgebildet, das einzelne Objekt aufgrund der Geometriedaten aufzufinden. Um ein Objektbild ausgeben zu können, das nur ein einzelnes Objekt zeigt, ist herkömmlich eine Segmentierung der Bilddaten erforderlich, die zwar möglich, jedoch sehr aufwändig und fehleranfällig ist. Beispielsweise sind Objektkanten bei schwachem Kontrast, etwa mehreren nahe zueinander angeordneten Objekten ähnlicher Farbe, nur schwer erkennbar. Eine Segmentierung auf Basis der Geometriedaten ist dagegen deutlich einfacher und robuster.

Die Auswertungseinheit ist bevorzugt dafür ausgebildet, das Objektbild anhand der Geometriedaten auf das einzelne Objekt zu beschneiden. Auch wenn nur die richtigen Einzelbilder zum Zusammensetzen eines Objektbildes verwendet werden, die wirklich Teile des Objekts enthalten, enthält das daraus entstehende Objektbild keineswegs notwendigerweise nur das Objekt selbst. Ein Zurechtschneiden (Cropping) würde an sich erfordern, das Objekt in dem Objektbild zu lokalisieren. Durch Verwendung der Geometriedaten wird diese Aufgabe erheblich vereinfacht, denn der relevante Bildbereich kann unabhängig vom Bildinhalt oder einer Merkmalserkennung sofort aus den Geometriedaten ermittelt werden. Das Objektbild kann absichtlich einen Randbereich um das Objekt herum aufweisen, damit die Umgebung des Objekts erkennbar bleibt.

Die Auswertungseinheit ist bevorzugt dafür ausgebildet, das Objektbild anhand der Geometriedaten in eine normierte Orientierung zu drehen. Bei einem quaderförmigen Objekt beispielsweise wird dadurch das als Rechteck erfasste Objekt bündig zur Horizontalen beziehungsweise Vertikalen gedreht. Die tatsächliche Orientierung des Objekts und damit die erforderliche Drehung wird äußerst einfach aus den Geometriedaten gewonnen.

Die Auswertungseinheit ist bevorzugt dafür ausgebildet, das Objektbild anhand der Geometriedaten perspektivisch zu entzerren. Die notwendige Transformation wird aus den Geometriedaten gewonnen, ohne dafür die Bilddaten analysieren zu müssen. In diesem Fall, anders als bei einem Zurechtschneiden oder Drehen des Objekts, wäre es nicht nur aufwändig, sondern sogar ausgesprochen schwierig, wenn nicht unmöglich, die tatsächliche, zu korrigierende Perspektive überhaupt mit Bildverarbeitungsverfahren zu erkennen.

Die Auswertungseinheit ist bevorzugt dafür ausgebildet, anhand der Geometriedaten Bereiche in den Einzelbildern aufzufinden, in denen direkte Reflexionen auftreten können. Derartige Reflexionen führen zu teilweise stark überbelichteten Stellen in den Einzelbildern, die gerade beim Codelesen störend sind. Die Geometriedaten erlauben aber festzustellen, wann eine Objektoberfläche zu einer Einzelkamera so ausgerichtet ist, dass solche Störreflexe drohen. Vorzugsweise werden dann bei der Bildfusion für den betroffenen Bildbereich Bilddaten eines anderen, überlappenden Einzelbildes ohne solche störenden Überbelichtungen verwendet.

Die Einzelkameras sind bevorzugt in einer Reihe angeordnet, wobei die Auswertungseinheit dafür ausgebildet ist, beim Zusammensetzen eines Objektbildes korrespondierende Bildmerkmale mit Hilfe der Epipolargeometrie, insbesondere längs Epipolarlinien zu suchen. Aufgrund der Reihenanordnung der Einzelkameras ist eine Vorzugsrichtung für zueinander gehörige Bildmerkmale festgelegt, und dies wird durch eine auf Epipolarlinien beschränkte Korrespondenzsuche ausgenutzt, die dadurch erheblich beschleunigt und vereinfacht wird. Bevorzugt, insbesondere im Falle einer Echtzeitsuche, sind die Einzelkameras derart senkrecht zur Bewegungsrichtung der Objekte montiert, dass die Epipolarlinien längs Bildzeilen der Bildsensoren liegen. Weiterhin können die Einzelkameras so genau zueinander justiert sein, dass jeweils die gleichen Pixelzeilen eine Epipolarlinie bilden, oder ein verbleibender Versatz wird anfänglich bestimmt und dann berücksichtigt.

Die Auswertungseinheit ist bevorzugt dafür ausgebildet, beim Zusammensetzen eines Objektbildes korrespondierende Bildmerkmale in einem Abstandsbereich zu suchen, der in Abhängigkeit von der aus den Geometriedaten abgeleiteten Entfernung des einzelnen Objekts gewählt ist. Im Überlappungsbereich liegen die von benachbarten Einzelkameras aufgenommenen identischen Merkmale je nach Höhe des Objekts näher beisammen oder weiter voneinander entfernt. Diese Höhe wird aber durch die Geometriedaten zugänglich. Die übrigen geometrischen Gegebenheiten, etwa die Montagehöhe der Einzelkameras und deren gegenseitiger Abstand, sind ebenfalls bekannt. Dadurch kann eine Korrespondenzsuche auf einen kleinen Bereich beschränkt werden. Das beschleunigt das Zusammenfügen und verhindert Fehler, weil außerhalb des in Abhängigkeit von der Höhe der Objekte gewählten Korrespondenzfensters ohnehin höchstens Scheinkorrespondenzen erkannt würden.

Die Auswertungseinheit ist bevorzugt dafür ausgebildet, die Verbindungsnaht ("Stichting Seam", "Stitching Line") des Objektbilds im Überlappungsbereich zweier Einzelbilder durch möglichst kontrastlose Bildbereiche zu legen. Leistungsfähige Bildfusionsalgorithmen, zumal wie erfindungsgemäß durch Geometriedaten unterstützt, sind durchaus in der Lage, auch in dem Übergangsbereich zwischen zwei Einzelbildern in einem Objektbild hochwertige Bilddaten zu erzeugen. Dennoch ist es von Vorteil, wenn etwaige verbleibende Verzerrungen nur kontrastschwache Bereiche betreffen, wo sie keine oder weniger Auswirkungen haben. Dadurch geht so wenig Information verloren wie möglich.

Mindestens eine Einzelkamera ist bevorzugt als kamerabasierter Codeleser ausgebildet. Dadurch können in den Einzelbildern oder fusionierten Einzelbildern, wie den Objektbildern, Codeinformationen ausgelesen werden. Um zu vermeiden, dass manche Codes erst nach Bildfusion lesbar werden, können die Überlappungsbereiche der Einzelkameras so groß gewählt werden, dass die zu lesenden Codes hineinpassen. Dann ist jeder Code in mindestens einem Einzelbild lesbar. Ein weiterer Weg ist das sogenannte Code-Stitching. Wenn ein Code in einem Übergangsbereich von Einzelbildern liegt, führt eine Decodierung auf Ebene von Einzelbildern nur zu Teilergebnissen, die dann aber anschließend zu einem Gesamtcodeinhalt zusammengesetzt werden. Eine Kameravorrichtung mit codelesenden Einzelkameras ist ein Lesesystem oder Lesetunnel wie einleitend erläutert. Zusätzlich zu Volumen und Codeinhalt kann aber nun erfindungsgemäß zu jedem Objekt auch ein Objektbild ausgegeben werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische dreidimensionale Ansicht einer Kameravorrichtung über einem Förderband mit zu erfassenden Objekten;
- Fig. 2: eine ergänzende Schnittdarstellung von Einzelkameras der Kameravorrichtung samt deren Sichtfeldern;
- Fig. 3: eine Blockdarstellung einer Kameravorrichtung;
- Fig. 4: eine beispielhafte Bildertapete einer Sequenz von bereits korrekt angeordneten Einzelbilder;
- Fig. 5: ein schematisches Ablaufdiagramm zur Erzeugung eines mit Hilfe von Geometriedaten aus Einzelbildern zusammengesetzten Objektbildes;
- Fig. 6: eine beispielhafte Darstellung der für ein Objektbild ausgewählten Einzelbilder, zugleich ein Ausschnitt der Figur 4; und
- Fig. 7: eine beispielhafte Darstellung von aus Einzelbildern zusammengesetzten Objektbildern, die zur Veranschaulichung gemeinsam mit allen Einzelbildern gemäß Figur 4 dargestellt sind.

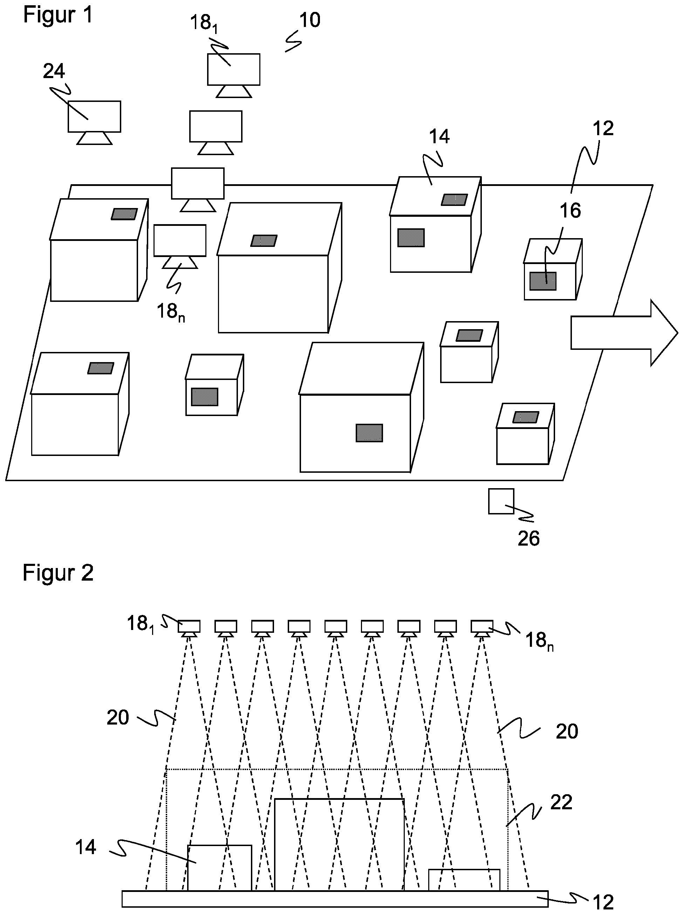

Figur 1 zeigt eine schematische dreidimensionale Ansicht einer Kameravorrichtung 10 über einem Förderband 12 mit zu erfassenden Objekten 14, auf denen beispielhaft, aber nicht notwendig Codes 16 angebracht sind. Das Förderband 12 ist ein Beispiel für die Erzeugung eines Stromes von Objekten 14, die sich relativ zu der stationären Kameravorrichtung 10 bewegen. Alternativ kann die Kameravorrichtung 10 bewegt werden, oder die Objekte 14 bewegen sich bei stationärer Montage der Kameravorrichtung 10 durch ein anderes Mittel als das Förderband 12 oder durch Eigenbewegung. Die Kameravorrichtung 10 umfasst mehrere Einzelkameras 18₁..18ₙ, wobei n ≥ 2 und in Figur 1 beispielhaft n=4.

Figur 2 zeigt ergänzend die Anordnung der Einzelkameras 18₁..18ₙ und ihrer Sichtfelder 20 über dem Förderband 12 in einer Schnittdarstellung. Die Kameravorrichtung 10 wird unter Bezugnahme auf die Figuren 1 und 2 weiter erläutert.

Die Einzelkameras 18₁..18ₙ weisen jeweils einen nicht dargestellten Bildsensor mit einer Vielzahl von zu einer Pixelzeile oder einer Pixelmatrix angeordneten Lichtempfangselementen sowie ein Objektiv auf. Die Einzelkameras 18₁..18ₙ sind vorzugsweise untereinander baugleich, um die Systemkomplexität zu verringern. Sie können aber mit unterschiedlichen Aufnahmeparametern arbeiten, insbesondere unterschiedlich fokussieren. In Figur 1 und 2 sind die Einzelkameras 18₁..18ₙ oberhalb des Förderbands 12 angeordnet. Es ist auch eine andere Anordnung von vorne, hinten, seitlich, unten oder einer schrägen Zwischenrichtung denkbar. Außerdem können Einzelkameras 18₁..18ₙ oder Anordnungen davon in mehreren Perspektiven angebracht werden, um zusätzliche Seiten der Objekte 14 zu erfassen, insbesondere dann, wenn ein noch zu erläuterndes Objektbild in Form eines 3D-Modells der erfassten Objekte 14 erzeugt werden soll.

In bevorzugter Ausführungsform sind die Einzelkameras 18₁..18ₙ als Codeleser ausgebildet, welche zusätzlich mit einer Decodiereinheit zum Auslesen von Codeinformationen und entsprechende Vorverarbeitungen zum Auffinden und Aufbereiten von Codebereichen ausgestattet sind. Es ist auch denkbar, Ströme von Objekten 14 ohne Codes 16 zu erfassen und dementsprechend auf die Decodiereinheit selbst oder auf deren Verwendung zu verzichten, beispielsweise zur Inspektion oder Qualitätskontrolle. Außerdem kann eine Decodierung auch nachgelagert außerhalb der Einzelkameras 18₁..18ₙ auf deren Bilddaten erfolgen. Die Einzelkameras 18₁..18ₙ können sowohl separate Kameras als auch Erfassungseinheiten innerhalb der gleichen Kamera sein.

Das Förderband 12 ist zu breit, um von einer Einzelkamera 18₁..18ₙ erfasst zu werden. Deshalb überlappen die Sichtfelder 20 der Einzelkameras 18₁..18ₙ in Querrichtung des Förderbandes 12 und folglich die jeweils von den Einzelkameras 18₁..18ₙ erzeugten Einzelbilder. In den Überlappungsbereichen stehen deshalb die Bilddaten in mehreren Einzelbildern redundant zur Verfügung. Dies wird in einer noch zu erläuternden Weise genutzt, um ein gemeinsames Bild irgendwo innerhalb eines Arbeitsbereichs 22 zusammensetzen zu können, der die gesamte relevante Breite des Förderbandes 12 umfasst. Der Grad der Überlappung von Sichtfeldern 20 und in Folge Einzelbildern ist je nach Ausführungsform variabel. Insbesondere ist auch eine vollständige Überlappung und somit hohe Redundanz vorstellbar, beispielsweise um Einzelbilder von Abschnitten der Objekte 14 mit unterschiedlicher Fokuslage aufzunehmen, so dass nicht Teile nahe beieinanderliegender Objekte nur unscharf erfasst werden. Unabhängig vom Grad der Überlappung hat ein System aus mehreren Einzelkameras 18₁..18ₙ den Vorteil, dass anders als bei nur einer Erfassungseinheit über die gesamte Breite nun unterschiedliche Fokussierungen je nach Höhe des jeweils erfassten Objekts 14 in dem Breitenabschnitt möglich werden, für den die jeweilige Einzelkamera 18₁..18ₙ zuständig ist.

Bezüglich der Bewegungsrichtung des Förderbandes 12 oberhalb der Einzelkameras 18₁..18ₙ ist ein Geometrieerfassungssensor 24 beispielsweise in Form eines an sich bekannten entfernungsmessenden Laserscanners angeordnet, der mit seinem Erfassungsbereich das gesamte Förderband 12 überdeckt. Der Geometrieerfassungssensor 24 vermisst die dreidimensionale Kontur der Objekte 14 auf dem Förderband 12, so dass die Kameravorrichtung 10 schon vor dem Erfassungsvorgang der Einzelkameras 18₁..18ₙ Geometriedaten der Objekte 14 kennt, aus denen sich beispielsweise Abmessungen, Volumen, Position und Form ergeben. Außerdem können die Geometriedaten genutzt werden, um die Einzelkameras 18₁..18ₙ individuell auf die jeweilige Objekthöhe zu fokussieren.

Für das nachfolgend erläuterte Erzeugen eines Objektbildes werden die Geometriedaten vorzugsweise so weiterverarbeitet, dass zu jedem Objekt 14 ein Polygon, insbesondere Rechteck, enthalten ist, welches das Objekt 14 umgibt. Soll als Objektbild ein vollständiges 3D-Modell entstehen, so werden entsprechend Geometriedaten der 3D-Kontur der Objekte 14 bereitgestellt. Zur Vereinfachung kann das Objekt 14 mit einem einfachen Körper umhüllt werden, etwa einem Quader (Bounding Box). Mittels der Geometriedaten erfolgt somit bereits eine Segmentierung der Objekte 14 unabhängig von den Bilddaten der Einzelkameras 18₁..18ₙ.

Ein Laserscanner hat einen sehr großen Sichtwinkel, so dass auch breite Förderbänder 12 erfassbar sind. Dennoch können in einer anderen Ausführungsform zusätzliche Geometrieerfassungssensoren nebeneinander angeordnet werden, auch um Abschattungseffekte durch unterschiedliche Objekthöhen zu reduzieren. Außerdem ist denkbar, zusätzliche Laserscanner oder andere Geometrieerfassungssensoren in weiteren Perspektiven anzuordnen, also nicht nur von oben wie dargestellt, um mehr über die 3D-Konturen der Objekte 14 zu erfahren. Schließlich kann in anderen Ausführungsformen die Geometrieerfassung in die Einzelkameras 18₁..18ₙ integriert sein.

Die Einzelkameras 18₁..18ₙ sind intrinsisch kalibriert, alle Kamerapositionen bekannt, und sie sind entweder parallel oder zumindest in bekannter Weise zueinander ausgerichtet. Zu den jeweiligen Einzelbildern der Einzelkameras 18₁..18ₙ sind vorzugsweise auch dynamische intrinsische Kameraparameter, wie die Fokuslage, die extrinsischen Kameraparameter und ein Zeitstempel des Aufnahmezeitpunkts bekannt. Ferner sind Position und Ausrichtung des Geometrieerfassungssensors 24 sowie der Erfassungszeitpunkt der Geometriedaten bekannt, so dass die Geometriedaten und die Bilddaten in ein gemeinsames Koordinatensystem umgerechnet werden können. Um den somit bekannten zeitlichen Zusammenhang zwischen Geometriedaten und Bilddaten korrekt zu berücksichtigen, wird mit einem Encoder 26 der Vorschub beziehungsweise die Geschwindigkeit des Förderbandes 12 überwacht. Alternativ bewegt sich das Förderband 12 zuverlässig mit einem bekannten Bewegungsprofil, oder entsprechende Informationen werden der Kameravorrichtung 10 von einer übergeordneten Steuerung übergeben.

In vielen herkömmlichen Lesesystemen ist ein Triggern der Bildaufnahme beziehungsweise des Codelesens über eine vorgelagerte Lichtschranke oder auch einen Laserscanner üblich. Die erfindungsgemäße Kameravorrichtung 10 arbeitet dagegen vorzugsweise in einem freilaufenden Modus, in dem kontinuierliche Geometriedaten und Bilddaten erfasst werden. Die Objekte 14 werden also aus dem Objektstrom heraus mit Hilfe des Geometrieerfassungssensors 24 segmentiert. Wie in Figur 1 dargestellt, ist auch erlaubt, dass Objekte 14 nebeneinanderliegen und sich sogar berühren, was in einem getriggerten System erhebliche Schwierigkeiten bereiten würde.

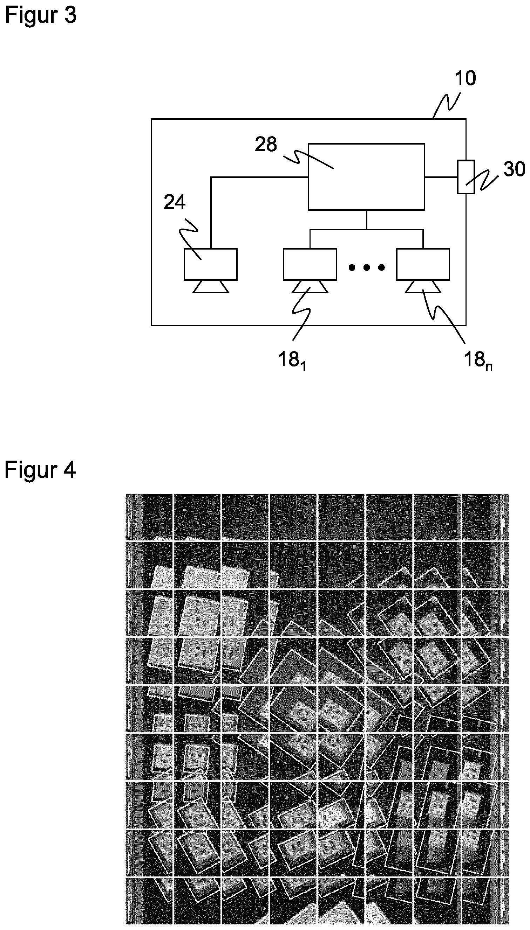

Figur 3 zeigt die Kameravorrichtung 10 nochmals in einer sehr vereinfachten Blockdarstellung. Die von dem Geometrieerfassungssensor 24 bestimmten Geometriedaten und die Bilddaten der Einzelkameras 18₁..18ₙ werden an eine Steuer- und Auswertungseinheit 28 übergeben. Dort werden die verschiedenen Daten in ein gemeinsames Koordinatensystem normiert und ausgewertet. Je nach Ausführungsform werden Geometriedaten oder Bilddaten, damit verbundene Parameter oder daraus gewonnene Größen wie Objekte 14 umschreibende Polygone oder Codeinhalte in verschiedenen Verarbeitungsstufen über einen Ausgang 30 ausgegeben. Die Funktionen der Steuer- und Auswertungseinheit 28 können entgegen der Darstellung auch verteilt sein, also zumindest einige Auswertungsschritte bereits in dem Geometrieerfassungssensor 24 oder den Einzelkameras 18₁..18ₙ oder umgekehrt auch erst extern stattfinden.

Die gewünschten Ausgabedaten hängen von der konkreten Ausführungsform und deren Konfiguration ab. In einer bevorzugten Ausführungsform wird zu jedem Objekt 14 das Volumen ausgegeben, auch in Form einer zertifizierten Volumenmessung beispielsweise bei Sperrgut, und/oder der Inhalt von auf dem Objekt 14 angebrachten Codes 16. Andere Ausführungsformen interessieren sich für andere Ausgabegrößen. Erfindungsgemäß wird jedenfalls ein Objektbild erzeugt und für eine Ausgabe zur Verfügung gestellt, welches das jeweilige Objekt 14 einzeln zeigt und anderen Ausgabegrößen wie Volumen oder Codeinhalt zugeordnet werden kann.

Die Erzeugung dieses Objektbildes aus Einzelbildern wird nun unter Bezugnahme auf die Figuren 4 bis 7 näher erläutert. Ein Grundgedanke dabei ist, dass die Geometriedaten für die Bildfusion von Einzelbildern zu einem Objektbild herangezogen werden. Das ist möglich, weil durch die bereits erläuterte Kalibrierung und Erfassung von zeitlichen Zusammenhängen Geometriedaten und Bilddaten der Einzelbilder zuordenbar sind. Eine Segmentierung der Objekte 14 in den Bilddaten ist nicht erforderlich, weil sie viel einfacher durch die Geometriedaten erfolgt. Das schafft die Voraussetzung für eine schnelle objektbasierte Bildfusion mit hohem Durchsatz. Dabei ist aber zu beachten, dass das Objektbild in vielen Anwendungsfällen anders als der Codeinhalt nicht für eine zeitkritische Sortierung, sondern erst nachträglich benötigt wird (Video Coding). Daher schafft zwar die Erfindung die Grundlage für eine schnelle und prinzipiell auch echtzeitfähige Erzeugung von Objektbildern, häufig steht aber auch nachträglich noch zumindest ein gewisses Zeitfenster dafür zur Verfügung.

Zur Erläuterung der Erzeugung eines Objektbildes eines einzelnen Objekts 14 aus den Einzelbildern zeigt Figur 4 zunächst als Ausgangspunkt ein Beispiel von Einzelbildern, die über einen gewissen Aufnahmezeitraum entstanden sind und einen Teil des Stroms der Objekte 14 erfassen. Die Einzelbilder (Frames) werden entsprechend der Position der erzeugenden Einzelkamera 18₁..18ₙ und der zeitlichen Abfolge sortiert. Die Anordnung der Einzelbilder entspricht also dank der mehrfach angesprochenen Kalibrierung, zeitlichen Abstimmung und Koordinatentransformation der Situation auf dem Förderband 12.

Figur 4 zeigt eine Art Bildertapete von Einzelbildern, die in einem Ringpuffer abgelegt sind, wobei die Bildabschnitte und insbesondere Teilansichten der Objekte 14 redundant in mehreren benachbarten Einzelbildern vorkommen. Das liegt in horizontaler Richtung an der Überlappung der Sichtfelder 20 der Einzelkameras 18₁..18ₙ. In vertikaler Richtung hängt der Überlapp und damit die Redundanz mit der Aufnahmeperiode der Einzelkameras 18₁..18ₙ zusammen, die zumindest etwas kürzer ist als die Zeit, die das Förderband braucht, um eine Strecke entsprechend der Höhe der Einzelbilder zurückzulegen. Prinzipiell wäre natürlich denkbar, mehrere Einzelkameras 18₁..18ₙ auch in Förderrichtung anzuordnen und die Bildertapete in einem Schritt oder jedenfalls in weniger Schritten zu erzeugen, als sie Zeilen von Einzelbildern aufweist.

Zusätzlich zu den Einzelbildern illustriert die Figur 4 auch die zugehörigen Geometriedaten, aus denen hier jeweils ein umschreibendes Rechteck für jedes Objekt 14 gewonnen wurde. Ein Rechteck lässt sich besonders leicht erzeugen und verwenden. Sofern das Objekt 14 unregelmäßig geformt ist, kann ein minimaler umgebender Quader (Bounding Box) verwendet werden, aus dem das Rechteck erzeugt wird. Alternativ sind natürlich auch kompliziertere Polygone oder noch andere geometrische Formen möglich.

In Figur 4 ist das umschreibende Rechteck als helle Linie dargestellt. Das Rechteck ist nicht unmittelbar erkennbar, da es durch die Überlappungen der Einzelbilder an den Übergangsstellen unterbrochen und partiell wiederholt wird. Das Rechteck wird aufgrund der Kalibration, der bekannten Geometrie des Aufbaus der Kameravorrichtung 10 und daraus resultierenden Transformationsvorschriften sowie der zeitlichen Zusammenhänge beziehungsweise des Vorschubs des Förderbands 12 in richtiger Weise um die Objekte 14 gelegt, ohne dazu die Bilddaten der Einzelbilder zu beachten. Das ist im Übrigen nur eine Veranschaulichung, für die Fusion von Objektbildern geht es darum, gezielt und ohne deren Analyse auf die Bilddaten innerhalb des Rechtecks zugreifen zu können.

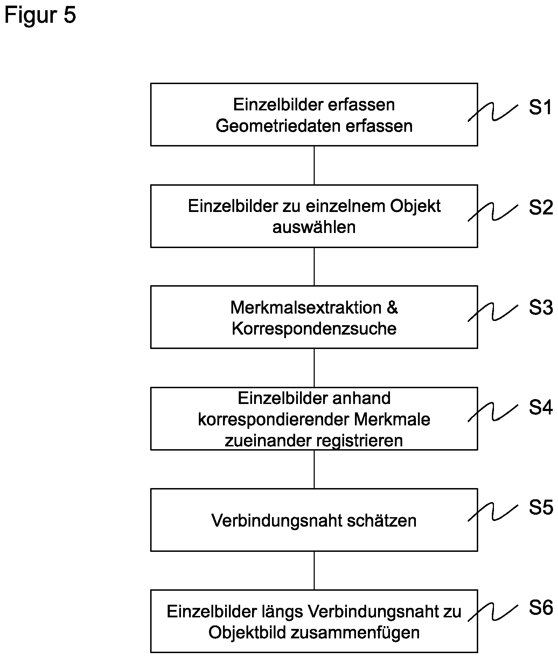

Figur 5 zeigt ein schematisches Ablaufdiagramm für ein beispielhaftes Vorgehen zur Erzeugung eines mit Hilfe von Geometriedaten aus Einzelbildern zusammengesetzten Objektbildes.

Zunächst werden in einem Schritt S1 durch die Einzelkameras 18₁..18ₙ Einzelbilder für einen gewissen Abschnitt des Stroms der auf dem Förderband 12 geförderten Objekte 14 erfasst. Gleichzeitig, genaugenommen bei einer Anordnung wie in Figur 1 jeweils kurz zuvor, werden mittels des Geometrieerfassungssensors 24 Geometriedaten erfasst. Die Bilddaten und Geometriedaten werden in ein gemeinsames Koordinatensystem transformiert. Das Ergebnis dieses Schrittes S1 ist der Ausgangspunkt für die Bildfusion, wie dies in Figur 4 beispielhaft als Bildertapete mit aufgrund Geometriedaten durch ein Rechteck umrandeten Objekten 14 - beziehungsweise je Einzelbild Objektfragmenten - illustriert und erläutert wurde.

In einem Schritt S2 werden nun die Einzelbilder aus der Bildertapete herausgesucht, die für ein Objektbild des betrachteten einzelnen Objekts 14 benötigt werden. Die Geometriedaten, also im Beispiel das Rechteck, erlauben eine sehr einfache und schnelle Entscheidung, in welchen Einzelbildern Teile dieses Objekts 14 abgebildet sind. In manchen Fällen ist das Objekt 14 so klein, dass es ganz in ein Einzelbild hineinpasst. Dann kann auf die Fusion verzichtet werden. Alternativ können durch die Bildfusion Bilddaten in Randbereichen dieses Einzelbildes verbessert werden.

Für die eigentliche Bildfusion, die im Schritt S3 beginnt, dient die Vorselektion der Einzelbilder in Schritt S2 als Eingabe für den Stitching-Algorithmus. Die Bildfusion erfolgt vorzugsweise zunächst mit zwei benachbarten Einzelbildern, und dann werden nach und nach an den Rändern weitere Einzelbilder hinzugefügt. Es genügt also zu verstehen, wie jeweils zwei Ausgangsbilder verbunden werden.

In den Ausgangsbildern werden übereinstimmende Bildmerkmale gesucht. Allgemein sucht man solche Korrespondenzen in allen Richtungen. Die Anordnung gemäß Figur 1 lässt jedoch eine Beschränkung zu, die sehr viel Aufwand einspart und daher vorzugsweise ausgenutzt wird. Denn die Einzelkameras 18₁..18ₙ sind nebeneinander aufgereiht und zueinander parallel ausgerichtet. Deshalb genügt es, Korrespondenzen längs Epipolarlinien zu suchen, wodurch für die Korrelationen die dazu senkrechte zweite Dimension ignoriert werden kann. Im allgemeineren Fall, insbesondere wenn es keine besondere Vorzugsrichtung der Bildzeilen der Einzelkameras 18₁..18ₙ gibt oder darüber nichts bekannt ist, wird die Epipolarliniensuche auch in Förderrichtung ausgeführt. Dabei kann entschieden werden, ob 4er, 8er oder auch alle Nachbarschaftsbeziehungen mittels Epipolarliniengeometrie untersucht werden sollen.

Die Geometriedaten erlauben sogar noch eine weitere Vereinfachung, die ebenfalls sehr viel Aufwand vermeidet. Wie in Figur 2 erkennbar, gibt es einen Zusammenhang zwischen der Objekthöhe und den möglichen Abständen, die von unterschiedlichen Einzelkameras 18₁..18ₙ aufgenommene Bildmerkmale zueinander haben können. Deshalb wird bei der Korrespondenzsuche vorzugsweise mit einem sehr engen Suchfenster gearbeitet, das zuvor mit Hilfe der Geometriedaten auf das konkrete einzelne Objekt 14 angepasst wird.

In einem Schritt S4 werden nun die Ausgangsbilder anhand der im Schritt S3 gefundenen Merkmalskorrespondenzen zueinander registriert. Sie werden also so zueinander angeordnet, dass die korrespondierenden Merkmale aufeinander liegen. Das ist natürlich in der Praxis nicht perfekt möglich, vielmehr werden die Restfehler der verbleibenden Abstände minimiert.

In einem Schritt S5 wird nun eine geeignete Verbindungsnaht gesucht. Grundsätzlich liegen nach dem Schritt S4 die Ausgangsbilder schon richtig zueinander, wobei im Überlappungsbereich noch redundante Bildinformationen der beiden Ausgangsbilder vorhanden sind. Man könnte also einfach in jedem Pixel des Überlappungsbereichs die Information von einem beliebigen der beiden Ausgangsbilder verwerfen, einen Mittelwert bilden oder dergleichen. Dadurch wird es aber in aller Regel sichtbare Fusionsartefakte geben. Daher wird vorzugsweise eine Verbindungsnaht durch möglichst kontrastarme Bereiche des Überlappungsbereichs geführt. Diesseits der Verbindungsnaht werden Bilddaten des einen Ausgangsbildes und jenseits des anderen Ausgangsbildes für das Objektbild verwendet. Kommt es dabei an der Verbindungsnaht noch zu Verwerfungen, so sind diese kaum sichtbar beziehungsweise es geht dadurch allenfalls sehr wenig Information verloren, da der kontrastarme Bereich ohnehin kaum Informationen enthielt.

In einem abschließenden Schritt S6 werden die Einzelbilder längs der jeweiligen Verbindungsnaht zu einem Objektbild zusammengefügt. Wie schon erwähnt, können die Schritte S2 bis S6 auch sukzessive für jeweils ein weiteres Einzelbild und ein entstehendes Objektbild ausgeführt werden.

Die beschriebenen Schritte können auch parallelisiert werden. Das gilt insbesondere für ein paralleles Abarbeiten der Schritte Merkmalsextraktion S3, Bildregistrierung S4, Nahtschätzung S5 und Verbinden S6 für verschiedene Einzelbilder. Durch Verwendung von leistungsfähiger Hardware, wie Mehrkernprozessoren oder GPUs (Graphical Processing Unit) lässt sich dadurch ein sehr hohe Durchsatz und bei Bedarf auch ein Echtzeitsystem erreichen.

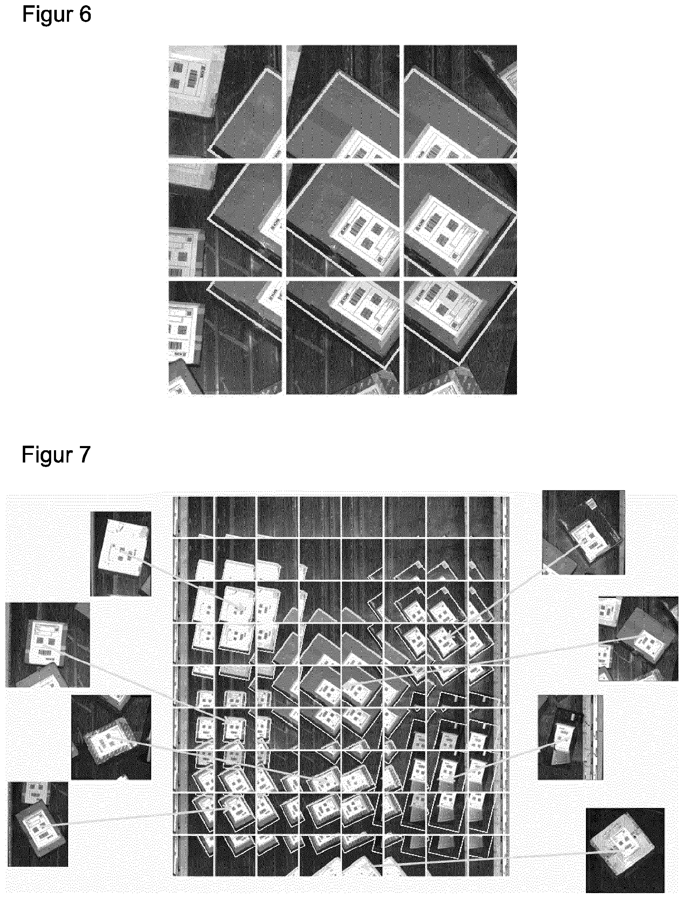

Figur 6 zeigt beispielhaft zur Illustration des soeben beschriebenen Ablaufs die in Schritt S2 aus der Bildertapete aller Einzelbilder ausgewählten Einzelbilder eines einzelnen Objekts samt umgebenden Rechtecks, welches die Geometriedaten repräsentiert. Das ist zugleich der für dieses Objekt 14 relevante Ausschnitt aus der in Figur 4 gezeigten Bildertapete.

Figur 7 zeigt beispielhaft das Endergebnis. In der Mitte ist nochmals die Bildertapete gemäß Figur 4 dargestellt. Zu den Seiten sind Objektbilder aller darin enthaltenen Objekte 14 nach jeweiliger Bildfusion gezeigt, die durch einen hellen Hilfsstrich mit dem jeweils zugehörigen Objekt in den Einzelbildern der Bildertapete verbunden sind.

Die Objektbilder können noch einer Nachbearbeitung unterzogen werden. Das betrifft zum einen eine Helligkeitskorrektur, denn die Einzelbilder, die ja von verschiedenen Einzelkameras 18₁..18ₙ und unter Umständen auch mit unterschiedlichen Aufnahmeparametern, insbesondere Fokuslagen, aufgenommen wurden, können sich in ihrer Helligkeit unterscheiden. Daher ist es sinnvoll, die Helligkeiten anzugleichen oder zumindest für einen fließenden Übergang an den Verbindungsnähten zu sorgen.

Eine bevorzugte weitere Nachbearbeitung schneidet das Objektbild auf das Objekt 14 zurecht (Cropping). Wie in Figur 7 zu sehen ist, enthält das Objektbild ansonsten noch zum Teil erhebliche zusätzliche Bildbereiche auch mit anderen Objektfragmenten. Durch die Geometriedaten, hier konkret das umgebende Rechteck, ist die Position des Objekts 14 in dem Objektbild sehr genau bekannt, so dass das Objekt ohne jegliche Bildverarbeitung ausgeschnitten werden kann. Ein definierter zusätzlicher Randbereich um das Objekt herum bleibt möglich, auch das lässt sich auf Ebene der Geometriedaten ohne Rückgriff auf die konkreten Bilddaten lösen.

In einem anderen bevorzugten Nachbearbeitungsschritt wird das Objekt in eine normierte Orientierung gedreht. Dazu muss lediglich das aus den Geometriedaten gewonnene Rechteck gedreht werden, die Bestimmung der tatsächlichen Orientierung des Objekts und damit der erforderlichen Drehung ist also gänzlich unproblematisch und unabhängig von den konkreten Bilddaten. Die normierte Orientierung ist im Falle eines Rechtecks vorzugsweise bündig mit der horizontalen beziehungsweise vertikalen Richtung. Das Drehen wird vorzugsweise mit einem Cropping verbunden, damit das Objektbild selbst insgesamt rechteckig bleibt.

Wird aus den Geometriedaten nicht nur das flache umgebende Rechteck wie dargestellt berücksichtigt, so ist auch eine perspektivische Entzerrung möglich. In einer Ausführungsform bleibt es bei einem aus den Geometriedaten gewonnenen Rechteck, das aber nun durch drei- und nicht nur zweidimensionale Koordinaten beschrieben wird. Dadurch können Oberflächen von Objekten 14 berücksichtigt werden, die nicht senkrecht zu den Einzelkameras 18₁..18ₙ stehen. Das schließt den Fall ein, dass die Einzelkameras 18₁..18ₙ mit einer gewissen Neigung zur Vertikalen orientiert sind, was beispielsweise wegen Glanzreflexen sinnvoll sein kann. Die Geometriedaten erlauben aber auch, eine unregelmäßige Oberfläche des Objekts 14 zu berücksichtigen und zu entzerren.

In den bisher erläuterten Ausführungsbeispielen nehmen die Einzelkameras 18₁..18ₙ ihre Einzelbilder aus einer einzigen Perspektive auf, beispielsweise von oben. Dementsprechend sind die Objektbilder zweidimensionale Draufsichten auf das entsprechende Objekt 14. In einer Weiterbildung ist mit einem ganz analogen Vorgehen denkbar, Einzelkameras 18₁..18ₙ in mehreren Perspektiven vorzusehen, etwa von oben, seitlich, von vorne und/oder hinten beziehungsweise in schrägen Zwischenperspektiven, und so weitere Objektansichten zu gewinnen. Die Geometriedaten helfen dabei in ganz analoger Weise. Der Geometrieerfassungssensor 24 liefert häufig nicht nur besonders einfach zu verarbeitende umgebende Rechtecke, sondern vollständige 3D-Konturen der Objekte 14. Somit ist es möglich, ein Objektbild in Form eines vollständigen 3D-Modells eines einzelnen Objekts 14 zu erstellen. Die 3D-Form ist aus den Geometriedaten bekannt. Die Texturen für die einzelnen Flächen werden mit Hilfe von Geometriedaten ganz analog gewonnen, wie dies zu den Figuren 4 bis 7 beschrieben wurde. Dann lässt sich das Objekt 14 im Nachgang über das als 3D-Modell erfasste Objektbild von allen Seiten betrachten, soweit in der entsprechenden Perspektive Einzelkameras 18₁..18ₙ montiert und deren Einzelbilder ausgewertet worden sind.

Erfindungsgemäß werden Objektbilder auf Basis der Geometriedaten aus Einzelbildern zusammengesetzt. Alternativ wäre auch denkbar, die Einzelbilder inhaltsbasiert zu beurteilen, um Objekte und Hintergrund zu unterscheiden. Diese Form der Segmentierung ist aber im Gegensatz zu einer Segmentierung aufgrund von Geometriedaten sehr rechenaufwändig und fehleranfällig. Eine andere Alternative besteht darin, die Einzelbilder kontinuierlich zu fusionieren, also quasi die gesamte Bildertapete der Figur 4, und dann Objektbilder einzelner Objekte 14 aus dem Gesamtbild herauszuschneiden. Dabei werden jedoch auch Einzelbilder fusioniert, die eigentlich mangels dargestellten Objekts 14 gar nicht benötigt werden. Das Segmentierungsproblem wäre auch nicht gelöst, es müsste auch hier bildbasiert zwischen Objekt 14 und Hintergrund unterschieden werden. Prinzipiell ist auch noch denkbar, Fokusdaten zu verwenden, um auf Objekte 14 in den Einzelbildern zu schließen, oder einen Trigger in Form eines vorgelagerten Sensors zu verwenden, um zumindest in Förderrichtung eine geeignete Auswahl von Einzelbildern für einzelne Objekte 14 zu treffen.

## Patentansprüche

1. Kameravorrichtung (10) zur Erfassung eines relativ zu der Kameravorrichtung (10) bewegten Stroms von Objekten (14), mit mehreren Einzelkameras (18₁..18ₙ), die jeweils einen Matrix-Bildsensor zur Aufnahme von zweidimensionalen Einzelbildern aufweisen, wobei die Einzelbilder jeweils einen Teil der Breite des Stroms abdecken und einander teilweise überlappen, mit einer Auswertungseinheit (28) zum Zusammensetzen von Einzelbildern und mit einem Geometrieerfassungssensor (24) zur Erfassung von Geometriedaten der Objekte (14),
**dadurch gekennzeichnet,**
**dass** die Auswertungseinheit (28) dafür ausgebildet ist, einen Teil des Stroms der Objekte (14) als eine Bildertapete zu erfassen, indem über einen Aufnahmezeitraum Einzelbilder mit einer Aufnahmeperiode erzeugt und entsprechend der Position der erzeugenden Einzelkamera (18₁..18ₙ) und der zeitlichen Abfolge sortiert werden, auf Basis der Geometriedaten diejenigen Einzelbilder aus der Bildertapete auszuwählen, die für ein Objektbild eines einzelnen Objekts (14) des Stroms von Objekten (14) benötigt werden, und das Objektbild aus den ausgewählten Einzelbildern zusammenzusetzen.

2. Kameravorrichtung (10) nach Anspruch 1,
wobei die Geometriedaten eine das einzelne Objekt (14) umschreibende Fläche, insbesondere ein Rechteck aufweisen.

3. Kameravorrichtung (10) nach Anspruch 1,
wobei die Geometriedaten die 3D-Kontur des einzelnen Objekts (14) beschreiben.

4. Kameravorrichtung (10) nach Anspruch 1 oder 2,
wobei die Auswertungseinheit (28) dafür ausgebildet ist, das einzelne Objekt (14) aufgrund der Geometriedaten aufzufinden.

5. Kameravorrichtung (10) nach einem der vorhergehenden Ansprüche,
wobei die Auswertungseinheit (28) dafür ausgebildet ist, das Objektbild anhand der Geometriedaten auf das einzelne Objekt (14) zu beschneiden.

6. Kameravorrichtung (10) nach einem der vorhergehenden Ansprüche,
wobei die Auswertungseinheit (28) dafür ausgebildet ist, das Objektbild anhand der Geometriedaten in eine normierte Orientierung zu drehen.

7. Kameravorrichtung (10) nach einem der vorhergehenden Ansprüche,
wobei die Auswertungseinheit (28) dafür ausgebildet ist, das Objektbild anhand der Geometriedaten perspektivisch zu entzerren.

8. Kameravorrichtung (10) nach einem der vorhergehenden Ansprüche,
wobei die Auswertungseinheit (28) dafür ausgebildet ist, anhand der Geometriedaten die Ausrichtung einer Objektoberfläche zu einer Einzelkamera (18₁..18ₙ) zu prüfen und so Bereiche in den Einzelbildern aufzufinden, in denen direkte Reflexionen auftreten können.

9. Kameravorrichtung (10) nach einem der vorhergehenden Ansprüche,
wobei die Einzelkameras (18₁..18ₙ) in einer Reihe angeordnet sind, und wobei die Auswertungseinheit (28) dafür ausgebildet ist, beim Zusammensetzen des Objektbildes korrespondierende Bildmerkmale mit Hilfe von Epipolargeometrie, insbesondere längs Epipolarlinien zu suchen.

10. Kameravorrichtung (10) nach einem der vorhergehenden Ansprüche,
wobei die Auswertungseinheit (28) dafür ausgebildet ist, beim Zusammensetzen des Objektbildes korrespondierende Bildmerkmale in einem Abstandsbereich der Bildmerkmale zueinander zu suchen, der in Abhängigkeit von der aus den Geometriedaten abgeleiteten Entfernung des einzelnen Objekts (14) gewählt ist.

11. Kameravorrichtung (10) nach einem der vorhergehenden Ansprüche,
wobei die Auswertungseinheit (28) dafür ausgebildet ist, die Verbindungsnaht des Objektbilds im Überlappungsbereich zweier Einzelbilder durch möglichst kontrastlose Bildbereiche zu legen.

12. Kameravorrichtung (10) nach einem der vorhergehenden Ansprüche,
wobei mindestens eine Einzelkamera (18₁..18ₙ) als kamerabasierter Codeleser ausgebildet ist.

13. Verfahren zur Erfassung eines bewegten Stroms von Objekten (14), bei dem mittels mehrerer Einzelkameras (18₁ .. 18ₙ) mit Matrixsensoren zweidimensionale Einzelbilder aufgenommen und zusammengesetzt werden, die jeweils einen Teil der Breite des Stroms abdecken und einander teilweise überlappen, wobei zusätzlich Geometriedaten der Objekte (14) erfasst werden, **dadurch gekennzeichnet,**
**dass** ein Teil des Stroms der Objekte (14) als eine Bildertapete erfasst wird, indem über einen Aufnahmezeitraum Einzelbilder mit einer Aufnahmeperiode erzeugt und entsprechend der Position der erzeugenden Einzelkamera (18₁..18ₙ) und der zeitlichen Abfolge sortiert werden, auf Basis der Geometriedaten diejenigen Einzelbilder aus der Bildertapete ausgewählt werden, die für ein Objektbild eines einzelnen Objekts (14) des Stroms von Objekten (14) benötigt werden, und das Objektbild aus den ausgewählten Einzelbildern zusammengesetzt wird.

## Claims

1. A camera apparatus (10) for detecting a stream of objects (14) moving relative to the camera apparatus (10), comprising a plurality of individual cameras (18₁..18ₙ) each having a matrix image sensor for recording individual images,
wherein the individual images each cover part of the width of the stream and overlap one another in part, an evaluation unit (28) for assembling individual images, and a geometry detection sensor (24) for detecting geometrical data of the objects (24),
**characterized in that** the evaluation unit (28) is configured to capture a part of the stream of objects (14) as an image wallpaper by generating individual images with a recording period during a recording duration and sorting them according to the position of the generating individual camera (18₁..18ₙ) and the temporal order, selecting those individual images from the image wallpaper on the basis of the geometry data which are required for an object image of an individual object (14) of the stream of objects (14), and assembling the object image from the selected individual images.

2. The camera apparatus (10) in accordance with claim 1,
wherein the geometrical data comprise an area circumscribing the individual object (14), in particular a rectangle.

3. The camera apparatus (10) in accordance with claim 1,
wherein the geometrical data describe the 3D contour of the individual object (14).

4. The camera apparatus (10) in accordance with claim 1 or 2,
wherein the evaluation unit (28) is configured to localize the individual object (14) on the basis of the geometrical data.

5. The camera apparatus (10) in accordance with any of the preceding claims
wherein the evaluation unit (28) is configured to crop the object image to the individual object (14) using the geometrical data.

6. The camera apparatus (10) in accordance with any of the preceding claims,
wherein the evaluation unit (28) is configured to rotate the object image into a standardized orientation with reference to the geometrical data.

7. The camera apparatus (10) in accordance with any of the preceding claims,
wherein the (28) evaluation unit is configured to perspectively equalize the object image using the geometrical data.

8. The camera apparatus (10) in accordance with any of the preceding claims,
wherein the evaluation unit (28) is configured to find the orientation of an object surface with respect to an individual camera (18₁..18ₙ) using the geometrical data and thus to localize regions in the individual images in which direct reflections can occur.

9. The camera apparatus (10) in accordance with any of the preceding claims,
wherein the individual cameras (18₁..18ₙ) are arranged in a row, and wherein the evaluation unit (28) is configured to search for corresponding image features with the aid of epipolar geometry, in particular along epipolar lines, on the assembly of the object image.

10. The camera apparatus (10) in accordance with any of the preceding claims,
wherein the evaluation unit (28) is configured, on the assembly of the object image, to search for corresponding image features in a distance region of the image features with respect to one another, said distance region being selected in dependence on the distance of the individual object (14) derived from the geometrical data.

11. The camera apparatus (10) in accordance with any of the preceding claims,
wherein the evaluation unit (28) is configured to place the stitching seam of the object image in the overlap region of two individual images through image regions of as low a contrast as possible.

12. The camera apparatus (10) in accordance with any of the preceding claims,
wherein at least one individual camera (18₁..18ₙ) is configured as a camerabased code reader.

13. A method of detecting a moving stream of objects (14), wherein two-dimensional individual images are recorded by means of a plurality of individual cameras (18₁..18ₙ) having matrix image sensors and are assembled, the individual images covering a part of the width of the stream each and overlapping one another in part, wherein geometrical data of the objects (14) are additionally detected,
**characterized in that** a part of the stream of objects (14) is captured as an image wallpaper by generating individual images with a recording period during a recording duration and sorting them according to the position of the generating individual camera (18₁..18ₙ) and the temporal order, selecting those individual images from the image wallpaper on the basis of the geometry data which are required for an object image of an individual object (14) of the stream of objects (14), and assembling the object image from the selected individual images.

## Revendications

1. Dispositif de caméra (10) pour détecter un flux d'objets (14) se déplaçant par rapport à l'appareil de caméra (10), comprenant une pluralité de caméras individuelles (18₁..18ₙ) ayant chacune un capteur d'image matricielle pour enregistrer des images individuelles, dans lequel les images individuelles couvrent chacune une partie de la largeur du flux et se recouvrent en partie, une unité d'évaluation (28) pour assembler des images individuelles, et un capteur (24) pour la détection géométrique de données géométriques des objets (24),
**caractérisé en ce que** l'unité d'évaluation (28) est configurée pour capturer une partie du flux d'objets (14) en tant que fond d'écran d'image en générant des images individuelles avec une période d'enregistrement pendant une durée d'enregistrement et en les triant selon la position de la caméra individuelle (18₁..18ₙ) génératrice et l'ordre temporel, sélectionnant ces images individuelles du fond d'écran d'image en fonction des données géométriques requises pour une image objet d'un objet individuel (14) du flux d'objets (14) et assemblant l'image objet des images individuelles sélectionnées.

2. Dispositif de caméra (10) selon la revendication 1,
dans laquelle les données géométriques comprennent une zone délimitant l'objet individuel (14), en particulier un rectangle.

3. Dispositif de caméra (10) selon la revendication 1,
dans laquelle les données géométriques décrivent le contour 3D de l'objet individuel (14).

4. Dispositif de caméra (10) selon la revendication 1 ou 2,
dans laquelle l'unité d'évaluation (28) est configurée pour localiser l'objet individuel (14) sur la base des données géométriques.

5. Dispositif de caméra (10) selon l'une des revendications précédentes,
dans laquelle l'unité d'évaluation (28) est configurée pour recadrer l'image de l'objet sur l'objet individuel (14) en utilisant les données géométriques.

6. Dispositif de caméra (10) selon l'une des revendications précédentes,
dans laquelle l'unité d'évaluation (28) est configurée pour faire tourner l'image de l'objet dans une orientation normalisée par rapport aux données géométriques.

7. Dispositif de caméra (10) selon l'une des revendications précédentes,
dans laquelle l'unité d'évaluation (28) est configurée pour égaliser en perspective l'image de l'objet en utilisant les données géométriques.

8. Dispositif de caméra (10) selon l'une des revendications précédentes,
dans laquelle l'unité d'évaluation (28) est configurée pour trouver l'orientation d'une surface d'objet par rapport à une caméra individuelle (18₁..18ₙ) en utilisant les données géométriques et pour localiser ainsi des régions dans les images individuelles dans lesquelles des réflexions directes peuvent survenir.

9. Dispositif de caméra (10) selon l'une des revendications précédentes,
dans laquelle les caméras individuelles (18₁..18ₙ) sont disposées en rangée, et dans laquelle l'unité d'évaluation (28) est configurée pour rechercher des caractéristiques d'image correspondantes à l'aide d'une géométrie épipolaire, en particulier le long de lignes épipolaires, sur l'assemblage de l'image d'objet.

10. Dispositif de caméra (10) selon l'une des revendications précédentes,
dans laquelle l'unité d'évaluation (28) est configurée, lors de l'assemblage de l'image de l'objet, pour rechercher des caractéristiques d'image correspondantes dans une région de distance des caractéristiques d'image les unes par rapport aux autres, ladite région de distance étant sélectionnée en fonction de la distance de l'objet individuel (14) dérivée des données géométriques.

11. Dispositif de caméra (10) selon l'une des revendications précédentes,
dans laquelle l'unité d'évaluation (28) est configurée pour placer le joint d'assemblage de l'image de l'objet dans la région de chevauchement de deux images individuelles à travers des régions d'image ayant un contraste aussi faible que possible.

12. Dispositif de caméra (10) selon l'une des revendications précédentes,
dans laquelle au moins une caméra individuelle (18₁..18ₙ) est configurée comme lecteur de code basé sur une caméra.

13. Procédé de détection d'un flux mobile d'objets (14), dans lequel des images individuelles bidimensionnelles sont enregistrées et assemblées au moyen d'une pluralité de caméras individuelles (18₁..18ₙ) ayant des capteurs d'image matricielle, les images individuelles couvrant chacune une partie de la largeur du flux et se chevauchant partiellement, les données géométriques des objets (14) étant détectées en outre,
**caractérisé en ce qu'**une partie du flux d'objets (14) est capturée en tant que fond d'écran d'image en générant des images individuelles avec une période d'enregistrement pendant une durée d'enregistrement et en les triant selon la position de la caméra individuelle (18₁..18ₙ) génératrice et l'ordre temporel, en sélectionnant les images individuelles du fond d'écran d'image sur la base des données géométriques qui sont requises pour une image objet d'un objet individuel (14) du flux d'objets (14), et en rassemblant l'image objet depuis les images individuelles sélectionnées.
